Europäisches Patentamt

European Patent Office

Office européen des brevets

(11) Numéro de publication: **0 051 542**
**B1**

(12) **FASCICULE DE BREVET EUROPEEN**

(45) Date de publication du fascicule du brevet:
31.10.84

(21) Numéro de dépôt: **81401743.0**

(22) Date de dépôt: **30.10.81**

(51) Int. Cl.³: **G 21 C 7/00**

(54) Procédé de conduite d'un réacteur nucléaire par déplacement, dans le coeur de ce réacteur, de groupes de barres de commande.

(30) Priorité: **03.11.80 FR 8023452**

(43) Date de publication de la demande:
**12.05.82 Bulletin 82/19**

(45) Mention de la délivrance du brevet:
**31.10.84 Bulletin 84/44**

(84) Etats contractants désignés:
**BE CH DE FR GB IT LI SE**

(56) Documents cités:
**DE - A - 2 446 247**
**FR - A - 1 340 259**
**FR - A - 1 395 221**
**FR - A - 2 080 625**
**FR - A - 2 305 826**
**FR - A - 2 395 572**
**US - A - 3 423 285**

(73) Titulaire: **Framatome, Tour Fiat 1 place de la Coupole,
F-92400 Courbevoie (FR)**

(72) Inventeur: **Deroubaix, Pierre, 5 boulevard de Charonne,
F-75011 Paris (FR)**
Inventeur: **Millot, Jean-Paul, 1 allée des Roitelets,
F-78310 Elancourt (FR)**

(74) Mandataire: **Bouget, Lucien et al,
CREUSOT-LOIRE 15 rue Pasquier, F-75383 Paris
Cedex 08 (FR)**

BUNDESDRUCKEREI BERLIN

## Description

L'invention concerne un procédé de conduite d'un réacteur nucléaire par déplacement, dans le coeur de ce réacteur, de groupes de barres de commande.

Dans les réacteurs nucléaires, tels que les réacteurs nucléaires refroidis par de l'eau sous pression, il est nécessaire de faire varier la puissance fournie par le réacteur, en fonction du programme d'exploitation de ce réacteur auquel est associée une turbine permettant l'entrainement d'un turbo-alternateur pour la production de courant électrique.

De telles variations de la puissance fournie par le réacteur sont obtenues par des variations de réactivité dans le coeur du réacteur, c'est-à-dire dans la zone où sont disposés les assemblages combustibles.

Pour faire varier la réactivité d'un réacteur nucléaire à eau sous pression, on utilise, d'une part des groupes de barres de commande en matériau absorbant les neutrons qu'on peut insérer entre les éléments combustibles dans le coeur du réacteur de façon plus ou moins complète et d'autre part des moyens permettant de faire varier la concentration en bore soluble du liquide réfrigérant, c'est-à-dire l'eau sous pression.

Pour faire varier la concentration en bore soluble de l'eau sous pression, on introduit dans cette eau soit de l'acide borique soit de l'eau pure. La concentration plus ou moins forte de l'eau sous pression en bore se traduit par une absorption plus ou moins grande des neutrons par le bore en solution.

Dans les réacteurs nucléaires à eau sous pression, les assemblages combustibles sont constitués par des faisceaux d'éléments combustibles tubulaires renfermant le matériau combustible, chaque assemblage constituant un élément de très grande longueur par rapport à sa section transversale.

Ces assemblages sont disposés côte à côte dans le coeur du réacteur en position verticale.

Les barres de commande sont constituées par des éléments tubulaires de même longueur que les éléments combustibles renfermant un matériau absorbant les neutrons. Ces éléments tubulaires sont reliés entre eux de façon à constituer une grappe mobile dans son ensemble dans la direction verticale à l'intérieur de certains des assemblages constituant le coeur du réacteur. Ces grappes ou barres de commande ne se déplacent cependant pas indépendamment les unes des autres; elles constituent au contraire des groupes à l'intérieur desquels l'ensemble des barres de commande se déplace de la même façon.

Ces groupes de barres de commande étant insérés dans le coeur du réacteur depuis la partie supérieure de celui-ci un mouvement vers le bas d'un groupe a donc tendance à diminuer la réactivité du coeur du réacteur alors qu'un mouvement d'un groupe vers le haut a tendance à augmenter cette réactivité.

On connaît un procédé de conduite d'un réacteur nucléaire à eau sous pression où les groupes de barres de commmande sont déplacés aussi bien dans un sens que dans l'autre, suivant une séquence prédéterminée. Les mouvements d'insertion ou d'extraction de chacun des groupes de barres de commande utilisés dans le réacteur sont donc déterminés en fonction des mouvements d'insertion ou d'extraction des autres groupes de barres de commande qui les précèdent dans la séquence définie a priori.

Dans ce procédé de conduite, les barres de commande ne sont déplacées que si un paramètre de conduite représentatif d'un écart entre la puissance demandée à la turbine et la puissance réelle du coeur se trouve à l'extérieur d'un intervalle prédéterminé, appelé bande morte, encadrant la valeur 0. D'autre part, la vitesse et le sens de déplacement des groupes de barres de commande sont déterminés uniquement en fonction de la valeur et du signe du paramètre de conduite.

Ce paramètre de conduite du réacteur est généralement homogène à une température et calculé par différence entre la température du coeur et une température de référence qui n'est fonction que de la puissance demandée à la turbine.

De cette façon, on peut adapter la puissance fournie par le réacteur qui est une fonction de la température du coeur à la puissance demandée à la turbine.

Cependant, les variations de puissance étant obtenues par une insertion variable de barres de commande suivant la hauteur du coeur du réacteur, la distribution du flux neutronique la hauteur du coeur, ou distribution axiale, se trouve perturbée. Il en est de même de la distribution axiale de puissance qui est semblable à la distribution de flux neutronique.

La conduite du réacteur nucléaire par insertion de barres de commande peut donc provoquer l'apparition de distributions axiales de puissance extrêmement éloignées d'une distribution idéale qui est celle qu'on observe dans le coeur lorsque les barres de commande sont faiblement insérées dans le coeur.

Cette distribution de puissance deut donc évoluer vers un état très défavorable qui provoque l'apparition de points chauds dans le coeur du réacteur pouvant même aboutir à une destruction locale des éléments combustibles.

Pour éviter cette évolution défavorable de la distribution axiale de puissance dans le coeur du réacteur, il est donc nécessaire de recourir à un moyen de contrôle de réactivité du coeur différent des barres de commande. Lorsque la distribution axiale de puissance évolue vers une distribution non souhaitable, on provoque donc une variation de la con centration en bore soluble de l'eau sous pression jusqu'au moment où le niveau de puissance souhaité peut être obtenu uniquement par l'action du bore soluble. On remet alors les barres de commande dans une position permettant d'obtenir une distribution axiale de puissance satisfaisante.

D'autre part, les perturbations de la distribution axiale de puissance sont encore aggravées lors des variations de puissance du réacteur par des phénomènes tels que la formation ou la disparition du xénon par réaction nucléaire. Pour compenser ces effets accroissant encore le déséquilibre de la distribution de puissance, on ne possède également comme moyen d'action que le bore soluble.

Ceci présente des inconvénients car l'action du bore soluble n'est pas instantanée et la mise en oeuvre de ce moyen de régulation doit se faire de façon manuelle.

Ce procédé est donc difficilement utilisable dans le cas où l'on veut modifier rapidement la puissance du réacteur.

En outre, il faut prévoir un circuit permettant soit l'introduction d'acide borique soit l'introduction d'eau de façon rapide et en quantité parfaitement dosée dans le fluide de refroidissement du réacteur.

Le but de l'invention est donc de proposer un procédé de conduite d'un réacteur nucléaire, par déplacement dans ce réacteur, de groupes de barres de commande lorsqu'un paramètre de conduite représentatif d'un écart entre la puissance demandée à la turbine et la puissance réelle du coeur est à l'extérieur d'un intervalle prédéterminé ou bande morte encadrant la valeur zéro, la vitesse et le sens de déplacement des groupes de barres étant déterminés uniquement en fonction de la valeur et du signe du paramètre de conduite, ce procédé de conduite devant permettre d'éviter l'utilisation du bore soluble pour réguler la distribution axiale de puissance dans le coeur du réacteur, en particulier lors de variations rapides de puissance de ce réacteur.

Dans ce but, lorsque le paramètre de conduite est à l'intérieur de sa bande morte, on opère une régulation de la distribution suivant la direction axiale du coeur, de la puissance dégagée par ce coeur, par déplacement d'au moins un groupe de barres, avec une vitesse et un sens de déplacement déterminés uniquement en fonction de la valeur et du signe du paramètre de conduite, lorsqu'un second paramètre représentatif de la distribution axiale de puissance, appelé déviation axiale est à l'extérieur d'un intervalle prédéterminé ou bande morte encadrant une valeur de référence de la déviation axiale, le groupe déplacé étant déterminé en fonction de la position des autres groupes dans le coeur du réacteur, du signe du paramètre de conduite et de l'écart de la déviation axiale par rapport à sa bande morte, et, lorsque le paramètre de conduite est à l'extérieur de sa bande morte, on fait varier les écarts entre le amplitudes d'insertion des groupes participant à la conduite du réacteur, par arrêt ou démarrage de groupes sélectionnés en fonction de la position des groupes dans le coeur du réacteur et de l'écart de la déviation axiale, soit par rapport à sa bande morte si cette déviation axiale est à l'extérieur de cette bande morte, soit par rapport à sa valeur de référence si la déviation axiale est à l'intérieur de sa bande morte.

Afin de bien faire comprendre l'invention, on va maintenant décrire à titre d'exemple non limitatif, en se référant aux figures jointes en annexe, un exemple de mise en oeuvre du procédé selon l'invention, pour un réacteur nucléaire comportant quatre groupes de barres de commande, dans le cas d'une variation de charge du réacteur de 100% à 15% de la puissance nominale avec retour à cette puissance.

La figure 1 représente un schéma logique de commande d'insertion des quatre groupes de barres de commande du réacteur. La figure 2 représente un schéma logique des commandes d'extraction des quatre groupes de barres de commande du réacteur.

La figure 3 représente la variation de la puissance du réacteur nucléaire lors d'un suivi de charge.

La figure 4 représente la variation correspondante de la déviation axiale pendant ce suivi de charge.

La figure 5 représente les positions des quatre groupes de barres de commande pendant le suivi de charge.

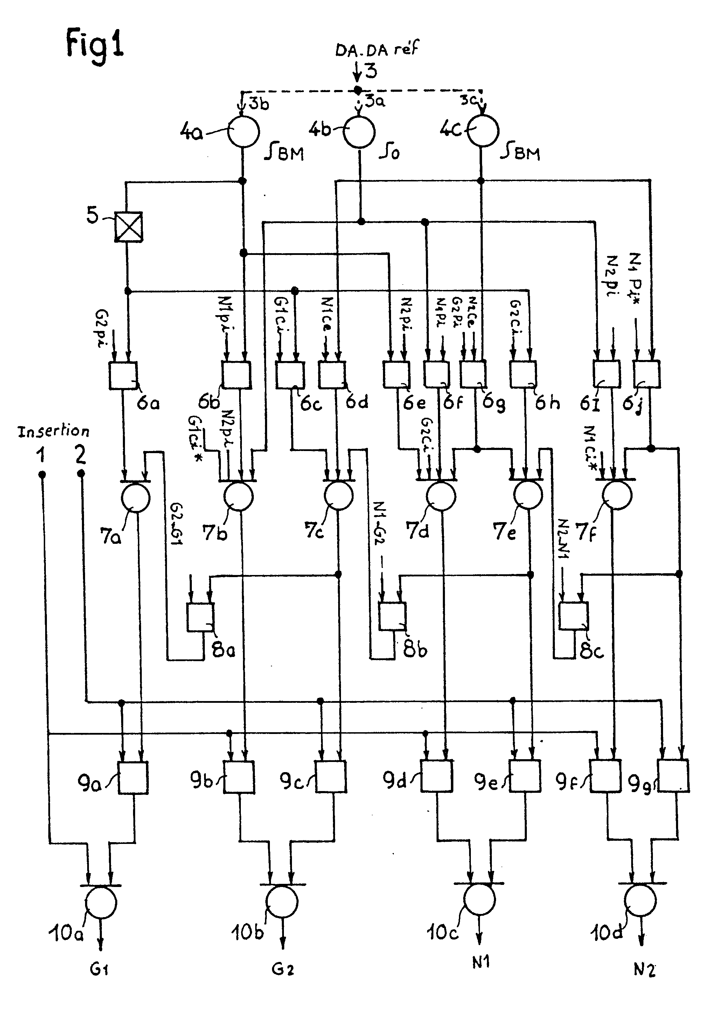

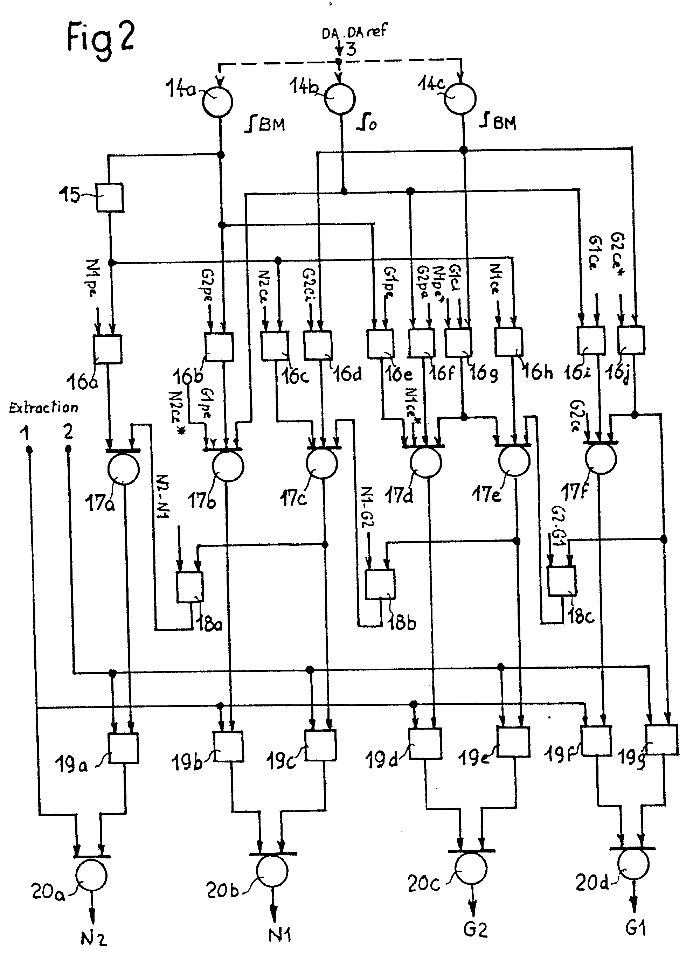

Les schémas logiques représentés aux figures 1 et 2 donnent une représentation symbolique des signaux et des opérateurs nécessaires pour la commande de quatre groupes de barres de commande G1, G2, N1 et N2 utilisés dans un réacteur nucléaire à eau sous pression.

Ces groupes G1 à N2 sont constitués par des grappes d'éléments absorbants qui se déplacent simultanément dans la direction verticale à l'intérieur du coeur du réacteur nucléaire.

A l'intérieur des groupes de barres de commande G1 et G2, certaines sont allégées en anti-réactivité, c'est-à-dire que certains éléments absorbants de la grappe sont remplacés par des éléments transparents aux neutrons.

Chacun de ces groupes G1 et G2 est un groupe qu'on désigne par groupe gris par oppositon aux groupes noirs N1 et N2 qui sont formés de grappes qui ne comprennent que des éléments fortement absorbants.

L'anti-réactivité d'un groupe gris, qui se mesure en pcm (pour cent mille) est donc nettement inférieure à l'anti-réactivité d'un groupe noir. C'est ainsi que les groupes gris ont une anti-réactivité inférieure à 700 pcm alors que les groupes noirs ont une anti-réactivité supérieure à 1000 pcm.

Les groupes gris produisent une perturbation moins forte de la distribution axiale de puissance que les groupes noirs.

On voit sur les figures 1 et 2 qu'à l'exception de trois signaux 1, 2 et 3 l'ensemble des signaux utilisés pour la commande des groupes G1, G2, N1 et N2 sont représentatifs de la position des groupes de barres de commande dans le coeur du réacteur.

Le paramètre de conduite du réacteur, comme dans le procédé selon l'art antérieur, est représentatif d'un écart entre la puissance demandée à la turbine et la puissance réelle.

Ce paramètre de conduite est homogène à une température et représente la différente $\Delta T$ entre une température de référence et la température du coeur du réacteur.

Un signal représentatif de la valeur de ce paramètre est élaboré à partir de signaux représentatifs de la température du coeur, d'une température de référence et de la puissance demandée à la turbine, puis comparé à deux valeurs limites représentant les bornes d'un intervalle centré sur la valeur zéro.

Lorsque $\Delta T$ est situé à l'extérieur de cet intervalle, le signal 1 est émis, soit sous la forme du signal Insertion 1, si $\Delta T$ est à l'extérieur de l'intervalle du côté des valeurs positives, soit sous la forme du signal Extraction 1 si $\Delta T$ est à l'extérieur de l'intervalle du côté des valeurs négatives.

Si $\Delta T$ se situe dans l'intervalle encadrant la valeur zéro appelée bande morte de la température, aucun signal 1 n'est émis.

On ne commande donc une action sur les barres de commande par le signal 1 que dans le cas où l'on enregistre un écart de température traduisant un écart entre la puissance demandée à la turbine et la puissance réelle du réacteur d'amplitude suffisante. Ceci est identique à ce qui se faisait dans les procédés de l'art antérieur.

En revanche, dans tous les cas, un signal 2 est émis soit un signal Extraction 2 lorsque $\Delta T$ est plus petit que zéro, soit un signal Insertion 2 lorsque $\Delta T$ est plus grand que zéro.

Dans tous les cas également on engendre à partir du signal $\Delta T$ un signal de vitesse pour le déplacement des barres de commande.

Le signal $\Delta T$ suivant son signe et sa valeur détermine donc une vitesse et un sens de déplacement des barres de commande.

On élabore également un signal représentatif d'un second paramètre destiné à prendre en compte la distribution axiale de puissance dans le coeur.

Ce paramètre est appelé déviation axiale de puissance (ou de flux) et est égal

$$\text{à:} \quad \frac{\varPhi H - \varPhi B}{\varPhi H + \varPhi B},$$

si l'on désigne par $\varPhi H$ le flux neutronique dans la moitié supérieure du coeur et $\varPhi B$ le flux neutronique dans la moitié inférieure du coeur.

On définit pour ce paramètre de déviation axiale (DA) une valeur de référence qui correspond à la distribution axiale de la puissance dans le coeur, lorsque les barres de commande sont toutes extraites du coeur, sauf les barres de commande du premier groupe G1 qui restent en permanence partiellement insérées.

La valeur de référence de la déviation axiale de puissance est donc très légèrement négative.

On définit autour de cette valeur de référence de la déviation axiale un intervalle, ou bande morte, dont les bornes sont DA réf — BM et DA réf + BM, en désignant par BM la demi-largeur de la bande morte.

Les autres signaux représentés de façon symbolique sur les figures 1 et 2 et relatifs à la position des groupes de barres de commande dans le coeur doivent être compris de la façon suivante:

— les deux groupes gris G1 et G2 et les deux groupes noirs N1 et N2 ont une position qui est repérée en ce qui concerne leur insertion ou leur extraction et qui donne lieu à l'émission d'un signal,

— la position de chacun des groupes est définie par rapport à certaines limites et non de façon quantitative exacte,

— on prend en compte également l'écart entre les grappes de commande de certains groupes.

Ainsi, la signification des signaux mentionnés sur les schémas 1 et 2 et correspondant à la position des groupes est la suivante:

| | |
|---|---|
| pi: | partiellement inséré |
| pi*: | inséré de plus de n'pas |
| pe: | partiellement extrait |
| pe*: | extrait de plus de n'pas |
| ce: | complètement extrait |
| ci: | complètement inséré |
| ci*: | à moins de n pas de l'insertion totale |
| ce*: | à moins de n pas de l'extraction totale |
| G2-G1: | écart entre G1 et G2 inférieur à n'pas. |

Les opérateurs logiques des dispositifs de commande d'insertion sont successivement, pour la commande en insertion des quatre groupes G1, G2 et N1, N2, trois opérateurs OU 4a, 4b et 4c, un opérateur NON 5, dix opérateurs ET 6a à 6j, six opérateurs OU 7a à 7j, trois opérateurs ET 8a à 8c, sept opérateurs ET 9a à 9g et enfin quatre opérateurs OU 10a à 10d.

Le dispositif de commande en extraction des quatre groupes comporte de son côté trois opérateurs OU 14a à 14c, un opérateur NON 15, dix opérateurs ET 16a à 16j, six opérateurs OU 17a à 17 g, trois opérateurs ET 18a à 18c, six opérateurs ET 19a à 19g, et enfin quatre opérateurs OU 20a à 20d.

Nous allons maintenant envisager, en nous référant aux figures 1 et 2, différents cas que l'on peut rencontrer lors de la conduite d'un réacteur nucléaire.

Les principes retenus pour la commande des barres sont, dans le but d'effectuer des variations de puissance rapides avec correction de la déviation axiale de puissance, uniquement en utilisant les barres de commande, l'obtention des corrections de la déviation axiale de puissance, de préférence avec des barres se déplaçant soit dans le haut du coeur soit dans le bas du coeur, c'est-à-dire des barres soit faiblement insérées, soit au contraire fortement insérées, et l'utilisation préférentielle des barres des déplaçant vers le milieu du coeur pour obtenir les variations de puissance.

En effet, il est bien connu que des déplacements des barres vers le haut ou le bas du coeur ont une grande influence sur la DA et une faible influence sur la variation de puissance et qu'au contraire des mouvements de barres vers le milieu du coeur ont une faible influence sur la déviation axiale et une forte influence sur la variation de puissance.

Si nous supposons tout d'abord que dans la conduite d'un réacteur nucléaire, à la fois le paramètre $\Delta T$ et le paramètre DA sont dans leur bande morte respective, on s'aperçoit en se reportant aux figures 1 et 2 qu'il ne se produit aucun mouvement de barre.

En effet, le signal 1 n'est pas émis et seul le signal 2 est émis soit à l'insertion se $\Delta T$ est plus petit que zéro, soit à l'extraction si $\Delta T$ est plus grand que zéro.

D'autre part le signal 3a de déviation axiale est émis à l'exclusion des signaux 3b et 3c.

Dans toutes les configurations, le signal 3a ne peut pas déclencher un signal susceptible de s'additionner à un signal 2 au niveau d'un des opérateurs ET 9a, 9c ou 9e ou encore 19a, 19c ou 19e. Toutes les barres restent donc immobiles.

Si maintenant $\Delta T$ est dans sa bande morte et si DA est en dehors de sa bande morte, seul le signal 2 est émis à l'exclusion du signal 1, soit à l'insertion, soit à l'extraction. D'autre part, soit le signal 3b soit le signal 3c est émis pour indiquer une sortie de Da de sa bande morte, soit au-dessous de cette bande morte, soit au-dessus de celle-ci.

Dans ce cas, en se reportant aux figures 1 et 2 on s'aperçoit que tous les groupes partiellement insérés normalement commandés soit à l'insertion soit à l'extraction par le signal 1 restent immobiles, à l'exception de l'un d'entre eux qui se déplace sous l'effet du signal 2, soit en insertion, soit en extraction suivant le signe de $\Delta T$.

Si nous supposons que les trois groupes G1, G2 et N1 sont déjà partiellement insérés dans cet ordre, puisque la séquence d'insertion des groupes est (G1, G2, N1, N2) dans le cas où le signal 3b est émis, c'est-à-dire si DA est inférieur à DA réf — BM, c'est le groupe G1 qui est commandé en insertion alors que si le signal 3c est émis, c'est le groupe N1 qui est commandé en insertion.

C'est dans un cas le groupe situé le plus bas, c'est-à-dire le plus inséré et dans l'autre le groupe situé le plus haut qui est déplacé, à l'exclusion des autes groupes.

Ce serait l'inverse dans le cas d'une extraction.

Dans tous les cas, le groupe déplacé soit en insertion soit en extraction se déplace à vitesse lente, la vitesse de déplacement, fonction de $\Delta T$, étant faible à l'intérieur de la bande morte de température.

Cette vitesse peut par exemple être fixée à huit pas par minute dans le cas des barres de commande de réacteur nucléaire à eau sous pression dont l'amplitude totale de déplacement est de 200 à 300 pas.

Dans le procédé suivant l'invention, on s'aperçoit donc que, bien que la température soit dans sa bande morte, on réalise une correction de la DA par déplacement d'un groupe choisi en fonction de la position des autres groupes de la valeur de la DA et du sens de déplacement.

Si nous supposons maintenant que la température est en dehors de sa bande morte, dans tous les cas, suivant le signe de $\Delta T$, un certain nombre de groupes sont en déplacement dans le coeur du réacteur soit en insertion, soit en extraction.

Si simultanément la déviation axiale est dans sa bande morte et supérieure à la valeur DA réf, on voit par exemple dans le cas d'une insertion des groupes G1, G2 et N1 déjà partiellement insérés, que les groupes G1, G2 et N1 reçoivent des signaux d'autorisation de déplacement en insertion et que le mouvement se poursuit.

Si le mouvement provoque une augmentation de la déviation axiale, celle-ci peut sortir de sa bande morte, et nous envisagerons ce cas plus bas, ou au contraire la déviation axiale peut diminuer jusqu'à devenir inférieure à sa valeur de référence.

Si la déviation axiale est inférieure à sa valeur de référence mais supérieure à la limite inférieure de la bande morte de déviation axiale DA réf — BM, le signal 3a devient négatif ce qui supprime le signal d'autorisation pour le groupe N1, si bien que ce groupe N1 est bloqué alors que les groupes G1 et G2 poursuivent leur insertion.

Ceci provoque une augmentation de la déviation axiale de puissance sauf dans le cas où malgré tout un phénomène annexe ferait passer la déviation axiale en dehors de sa bande morte, en dessous de celle-ci.

Nous envisagerons également ce cas plus bas.

Dans le cas où la déviation axiale augmente jusqu'au dessus de sa valeur de référence en restant dans sa bande morte, le groupe N1 reçoit de nouveau le signal d'autorisation et subit un démarrage en insertion.

Ces mouvements successifs d'arrêt de redémarrage du groupe N1 peuvent se poursuivre, si bien que les écarts entre les amplitudes d'insertion de ce groupe et des autres groupes est amené à se modifier pour effectuer les corrections de la déviation axiale.

Si l'on suppose toujours que les trois groupes G1, G2 et N1 sont commandés en insertion par le signal Insertion 1 et que la déviation axiale de puissance sort de sa bande morte et passe au-dessus de celle-ci, on s'aperçoit que le signal d'autorisation d'insertion du groupe N2 est alors émis et que ce groupe commence à s'insérer dans le haut du coeur pour diminuer la déviation axiale de puissance.

Toujours dans le cas d'une insertion des groupes G1 et G2 avec le groupe N1 bloqué dans le haut du coeur, dans le cas où la déviation axiale de puissance sort de sa bande morte par le bas, on réalise un blocage du groupe N1, de façon qu'aucun groupe ne s'engage par le haut du coeur alors que les groupes G1 et G2 continuent à s'insérer vers le bas du coeur, ce qui diminue $\Phi$ B et donc augmente la déviation axiale de puissance jusqu'au moment où celle-ci revient dans sa bande morte. On revient alors à l'un des cas envisagés plus haut.

Dans le cas où c'est le signal Extraction 1 qui est émis, si la déviation axiale de puissance est au-dessus de la limite supérieure de sa bande morte, on recourt à l'extraction d'un groupe situé dans le bas du coeur pour limiter la déviation axiale de puissance.

On voit que dans tous les cas on réalise une modification des amplitudes d'insertion existant entre les différents groupes utilisés pour la commande du réacteur.

Lorsque $\Delta$ T au-delà d'une certaine limite en dehors de sa bande morte, les déplacements des groupes se font à plus grande vitesse que lorsque $\Delta$ T est à l'intérieur de sa bande morte.

La commande des groupes se fait indifféremment par les signaux 1 ou 2 qui agissent dans le même sens.

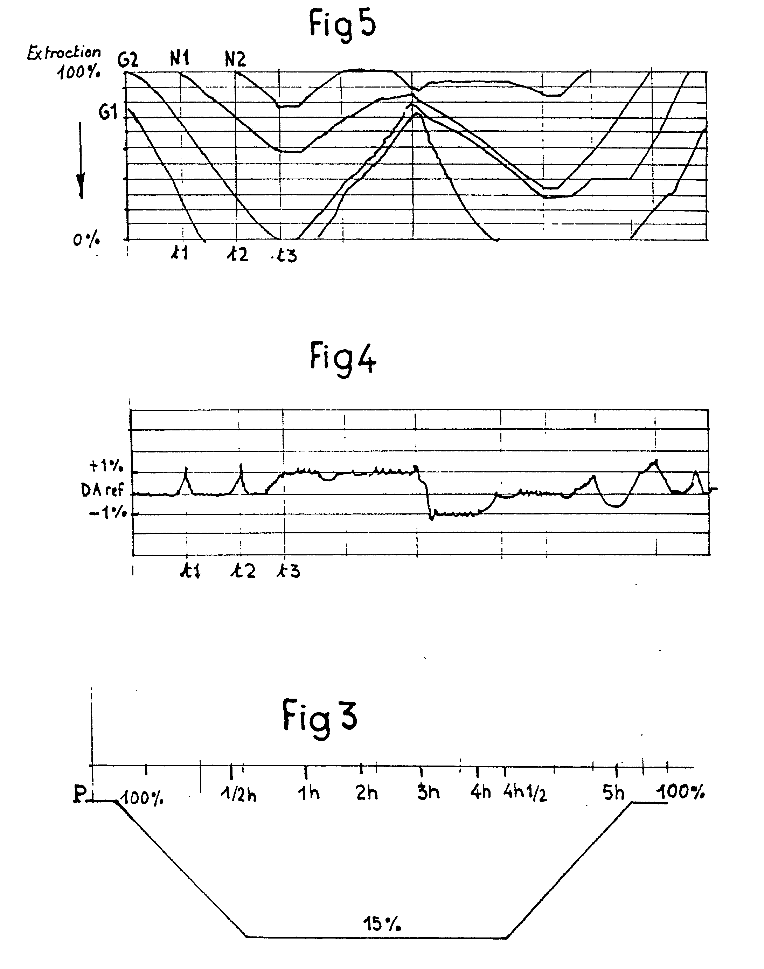

On va maintenant décrire en se référant aux figures 3, 4 et 5 un exemple d'application du procédé suivant l'invention dans le cas d'un suivi de charge pendant une durée de quelques heures, l'évolution de la puissance du réacteur au cours de ces heures étant donnée à la figure 3.

On part de la puissance nominale du réacteur et on fait baisser la puissance jusqu'à 15% de la puissance nominale en une demi-heure puis on maintient un palier à 15% de la puissance nominale pendant 4 heures avant de revenir à la puissance nominale en une demi-heure.

La figure 4 donne l'évolution de la distribution axiale de puissance pendant ces 5 heures de fonctionnement alors que la figure 5 donne la position des différents groupes de barres de commande G1, G2, N1 et N2 entre 0 et 100% d'extraction.

Les variations de la déviation axiale de puissance sont maintenues dans un intervalle de ±1% autour de la valeur centrale DA réf.

A l'instant initial seul le groupe G1 est faiblement inséré dans le haut du coeur, les groupes G2, N1 et N2 étant complètement extraits.

Pour faire baisser la puissance jusqu'à 15% de la puissance nominale on commence à insérer les groupes G1 et G2 dont la séquence d'insertion détermine l'insertion successive.

Un certain écart étant maintenu entre G1 et G2 per arrêt ou redémarrage de G2, leurs effets sur la déviation axiale de puissance se compensent et cette déviation axiale oscille faiblement autour de sa valeur de référence.

A un instant t1 au cours de l'insertion des barres cependant, la déviation axiale de puissance atteint la limite supérieure DA réf +1%, ce qui entraîne la mise en oeuvre d'un nouveau groupe N1 dans le haut du coeur pour la diminution de cette déviation axiale par action simultanée des groupes G1, G2 et N1.

Il en est de même à l'instant t2 où l'intervention d'un nouveau groupe N2 dans le haut du coeur rétablit la déviation axiale de puissance.

On voit que le procédé suivant l'invention permet ainsi de maintenir la déviation axiale de puissance dans un intervalle d'amplitude ±1% autour de la déviation axiale de référence.

Après l'insertion complète du groupe G1, les groupes G2, N1 et N2 assurent la descente en puissance jusqu'à ce que le palier 15% soit atteint à l'instant t3.

Le paramètre de température $\Delta$ T entrant alors dans sa bande morte, les groupes de barres de commande sont bloqués en position d'insertion jusqu'au moment où l'on effectue une remontée des groupes à puissance constante égale à 15% de la puissance nominale.

Au cours de la remontée des groupes à puissance constante, c'est-à-dire au cours du mouvement d'extraction de ces groupes G1, G2, N1 et N2, le paramètre de conduite $\Delta$ T est positif, tantôt en dehors de sa bande morte, tantôt à l'intérieur. La déviation axiale de puissance est contrôlée dans les deux cas par le réglage de l'écart entre les différents groupes en cours de déplacement, par arrêt et redémarrage successifs de ces groupes.

De la même façon pendant la redescente des groupes, c'est-à-dire pendant leur insertion, après que le paramètre de conduite $\Delta$ T soit redevenu négatif, il est tantôt en dessous de sa bande morte tantôt à l'intérieur et la régulation des écarts entre les différents groupes G1, G2, N1 et N2, par arrêt et redémarrage de ces groupes permet de maintenir la déviation axiale de puissance à l'intérieur de sa bande morte.

Il est à noter également que le passage de la déviation axiale en-dessous de sa valeur de référence, à l'intérieur de la bande morte de la déviation axiale de puissance, entraine le blocage d'un groupe qui est le groupe le plus haut lors de l'insertion des groupes, c'est-à-dire le groupe N2 dans l'exemple décrit à la figure 5. Le redémarrage de ce groupe se produit si la déviation axiale de puissance repasse au-dessus de sa valeur de référence à l'intérieur de la bande morte de la déviation axiale de puissance.

A la fin du palier à 15% de la puissance nominale, on opère une remontée des groupes c'est-à-dire une extraction dans l'ordre N2, N1, G2 et G1.

Pendant cette remontée des groupes, on opère également une régulation de la déviation axiale de puissance par blocage et redémarrage des groupes en fonction de la position de la déviation axiale de puissance par rapport à sa valeur de référence et par rapport à sa bande morte.

On peut remarquer que la remontée globale des groupes pendant le palier bas diminue cependant les possiblités de l'ensemble des groupes de barres de commande en ce qui concerne le retour en puissance.

Il est bien évident cependant qu'on peut choisir de préserver intégralement la possibilité de retour en puissance lorsqu'on est au palier bas de puissance (15% de la puissance nominale, dans notre exemple) en gardant une insertion suffisante des barres de commande en utilisant le système de borication et dilution de l'eau sous pression servant de réfrigérant.

En effet, grâce au procédé selon l'invention, qui permet une régulation de la déviation axiale de puissance, l'utilisation de ce dispositif de borication-dilution pourra être utilisé pour garder les barres de commande sensiblement aussi insérées qu'il est nécessaire pour un retour rapide en puissance dont l'utilité pourrait se faire sentir en fonction des besoins de la production d'énergie.

Au contraire, si on choisit de ne préserver qu'un retour partiel en puissance ou de ne pas maintenir cette possibilité de retour en puissance, on peut laisser les barres remonter sous l'effet de la production du xénon pendant le palier bas de puissance.

C'est en effet cette production de xénon à puissance constante qui nécessite la remontée des barres pendant la première partie du palier.

Etant donné les possibilités de réglage des écarts existant entre les différents groupes de barres, la déviation axiale de puissance est toujours régulée et l'on évite ainsi de recourir au système de borication et dilution du réfrigérant, ce qui réduit d'autant le retraitement des effluents.

Le procédé suivant l'invention permet également de faire du suivi de charge en fin de vie du combustible quand la dilution devient lente.

On voit donc que les principaux avantages du procédé selon l'invention sont de permettre un réglage de la déviation axiale de puissance indépendamment de l'utilisation d'un dispositif de borication ou de dilution du réfrigérant, sauf à un niveau de puissance égal à la puissance nominale ou proche de cette puissance, lorsque la quantité de xénon présent dans le réacteur n'est pas stabilisée.

Si l'on désire maintenir les possibilités de retour en puissance du réacteur, par exemple dans une phase à puissance réduite au cours de laquelle la production du xénon nécessiterait une remontée des barres, on peut utiliser le dispositif de borication et dilution du réfrigérant pour maintenir les barres de commande à une insertion suffisante et même plutôt supérieure à ce qui serait juste nécessaire pour le retour en puissance.

Dans tous les cas, le procédé suivant l'invention permet une régulation de la déviation axiale de puissance par arrêt et démarrage de groupes choisis dans l'ensemble des groupes de régulation.

Le procédé suivant l'invention permet d'opérer cette régulation de la déviation axiale de puissance, aussi bien dans le cas de paliers de puissance prolongés que dans le cas de transitoires rapides.

Mais le procédé suivant l'invention ne se limite pas au mode de réalisation qui vient d'être décrit, il en comporte au contraire toutes les variantes.

C'est ainsi qu'on a décrit un procédé de conduite utilisant quatre groupes de barres de commande dont deux groupes gris et deux groupes noirs mais qu'il est également possible d'utiliser des ensembles différents de groupes de barres de commande, par exemple six groupes gris ou trois groupes gris et deux groupes noirs.

L'invention ne se limite pas non plus à l'utilisation de deux signaux de température différents dont l'un n'est transmis que lorsque l'écart de température sort de sa bande morte et dont l'autre est transmis quelle que soit la position du paramètre de conduite. Au contraire, on peut imaginer d'autres types de signaux et même des signaux représentatifs d'un paramètre de conduite différent d'un paramètre $\Delta T$ homogène à une température et représentant la différence entre la température du coeur et une température de référence.

Enfin, le procédé suivant l'invention s'applique dans tous les cas où un réacteur nucléaire peut être piloté par déplacement dans le coeur de ce réacteur de groupes de barres de commande.

## Revendications

1. Procédé de conduite d'un réacteur nucléaire par déplacement dans le coeur de ce réacteur de groupes de barres de commande lorsqu'un paramètre de conduite représentatif d'un écart entre la puissance demandée à la turbine et la puissance réelle du coeur est à l'extérieur d'un intervalle prédéterminé, ou bande morte, encadrant la valeur zéro, la vitesse et le sens de déplacement des groupes de barres étant déterminés uniquement en fonction de la valeur et du signe de paramètre de conduite, caractérisé par le fait que, lorsque le paramètre de conduite est à l'intérieur de sa bande morte, on opère une régulation de la distribution suivant la direction axiale du coeur de la puissance dégagée par ce coeur, par déplacement d'au moins un groupe de barres, avec une vitesse et un sens de déplacement déterminés uniquement en fonction de la valeur et du signe du paramètre de conduite, lorsqu'un paramètre représentatif de la distribution axiale de puissance, appelée déviation axiale, est à l'extérieur d'un intervalle prédéterminé, ou bande morte, encadrant une valeur de référence de la déviation axiale, le groupe déplacé étant déterminé en fonction de la position des autres groupes dans le coeur du réacteur, du signe du paramètre de conduite et de l'écart de la déviation axiale par rapport à sa bande morte, et que, lorsque le paramètre de conduite est à l'extérieur de sa bande morte, on fait varier les écarts entre les amplitudes d'insertion des groupes participant à la conduite du réacteur par arrêt ou démarrage de groupes sélectionnés en fonction de la position des groupes dans le coeur du réacteur et de l'écart de la déviation axiale soit par rapport à sa bande morte, si cette déviation axiale est à l'extérieur de cette bande morte, soit par rapport à sa valeur de référence si la déviation axiale est à l'intérieur de sa bande morte.

2. Procédé de conduite suivant la revendication 1 caractérisé par le fait qu'on élabore un signal représentatif du paramètre de conduite du réacteur, qu'on compare ce signal avec les bornes d'un intervalle représentant la bande morte du paramètre de conduite, qu'on compare ce signal avec la valeur zéro pour en déterminer le signe puis qu'on émet deux signaux différents d'insertion ou d'extraction des barres de commande suivant le signe du paramètre de conduite, si ce paramètre est à l'extérieur de sa bande morte et un seul signal d'insertion ou d'extraction des barres de commande suivant le signe du paramètre de conduite, si ce paramètre est à l'intérieur de sa bande morte, qu'on introduit ces signaux ainsi que des signaux représentatifs de la déviation axiale de puissance et de la position des groupes de barres de commande dans un ensemble de traitement logique déterminant les signaux d'autorisation ou d'interdiction des déplacements des différents groupes de barres de commande.

3. Procédé de conduite selon l'une quelconque des revendications 1 et 2, caractérisé par le fait qu'on utilise concurremment aux groupes de barres de commande, un système de réglage de la teneur en bore soluble d'un milieu réfrigérant au contact avec les éléments combustibles du coeur du réacteur nucléaire.

4. Procédé de conduite d'un réacteur suivant la revendication 3 caractérisé par le fait qu'on maintient les groupes de barres de commande, lorsque la puissance du réacteur est inférieure à la puissance nominale, dans une position d'insertion sensiblement égale à celle qui serait juste nécessaire pour obtenir le retour à pleine puissance à partir des barres de commande uniquement, utilisant le système de modification de la teneur en bore soluble et ce, pour préserver une possibilité de retour en puissance rapide du réacteur.

5. Procédé de conduite d'un réacteur nucléaire suivant l'une quelconque des revendications 1, 2, 3 et 4, caractérisé par le fait qu'un au moins des groupes de barres de commande est allégé en anti-réactivité, cette anti-réactivité étant inférieure à 700 pcm.

6. Procédé de conduite suivant la revendication 5, caractérisé par le fait qu'on utilise deux groupes allégés en anti-réactivité ou groupes gris, et deux groupes fortement absorbants ou groupes noirs.

**Patentansprüche**

1. Verfahren zum Steuern eines Kernreaktors durch Verschieben von Regel- und Steuerstabbündel in dem Reaktorkern, wenn eine einen Unterschied zwischen der geforderten Turbinenleistung und der wirklichen Kernleistung darstellende Steuergröße sich außerhalb eines vorbestimmten um den Nullpunkt liegenden Intervalls oder einer Totzone befindet, wobei die Verschiebegeschwindigkeit und -richtung der Steuerstabbündel nur entsprechend dem Wert und dem Zeichen der Steuergröße bestimmt wird, dadurch gekennzeichnet, daß eine Regelung der Verteilung gemäß der axialen Kernrichtung der durch diesen Kern abgegebenen Leistung durch Verschieben mindestens eines Steuerstabbündels mit einer nur entsprechend dem Wert und dem Zeichen der Steuergröße bestimmten Verschiebegeschwindigkeit und -richtung vorgenommen wird, wenn die Steuergröße in deren Totzone liegt, und wenn sich eine die als Axialabweichung zeichnete axiale Leistungsverteilung darstellende Größe außerhalb eines um einen Bezugswert der Axialabweichung liegenden vorbestimmten Intervalls oder einer Totzone befindet, wobei das verschobene Bündel entsprechend der Lager der anderen Bündel im Reaktorkern, dem Zeichen der Steuergröße und des Abstandes der Axialabweichung zu deren Totzone bestimmt wird, und daß, wenn die Steuergröße außerhalb deren Totzone liegt, die Unterschiede zwischen den Eintauchtiefen der an der Reaktorsteuerung beteiligten Bündel durch Anhalten oder Verfahren von Bündel verändert werden, die entsprechend der Lage der Bündel im Reaktorkern und dem Abstand der Axialabweichung entweder zu deren Totzone, wenn diese Axialabweichung außerhalb dieser Totzone liegt, oder zu deren Bezugswert, wenn die Axialabweichung innerhalb deren Totzone liegt, gewählt werden.

2. Steuerverfahren nach Anspruch 1, dadurch gekennzeichnet, daß ein die Steuergröße des Reaktors darstellendes Signal erzeugt wird, daß dieses Signal mit den Grenzen eines die Totzone der Steuergröße darstellendes Intervall verglichen wird, daß zur Zeichenfeststellung dieses Signal mit dem Nullwert verglichen wird, daß dann zwei verschiedene Signale zum Einführen oder Herausziehen der Steuerstäbe je nach dem Zeichen der Steuergröße abgegeben werden, wenn diese Größe außerhalb der Totzone liegt, sowie nur ein Signal zum Einführen oder Herausziehen der Steuerstäbe je nach dem Zeichen der Steuergröße, wenn diese Größe innerhalb der Totzone liegt, daß diese Signale sowie die axiale Leistungsabweichung und die Lage der Steuerstabbündel darstellenden Signale einer logischen Verarbeitungseinheit zugeführt werden, die Signale zur Genehmigung und Verbot der Bewegung der verschiedenen Steuerstabbündel bestimmt.

3. Steuerverfahren nach einem der Ansprüche 1 und 2, dadurch gekennzeichnet, daß ein System zur Gehalteinstellung von löslichem Bor in einem Kühlmedium, das mit den Reaktorkern-Brennelementen in Kontakt steht, gleichzeitig mit den Steuerstabbündeln zur Anwendung kommt.

4. Verfahren zum Steuern eines Kernreaktors nach Anspruch 3, dadurch gekennzeichnet, daß, wenn die Reaktorleistung unter der Nennleistung liegt, die Steuerstabbündel in einer eingefahrenen Lage verbleiben, die im wesentlichen derjenigen entspricht, die gerade erforderlich wäre um nur mit Hilfe der Steuerstäben zur Volleistung zurückzukehren, in dem das System zur Gehaltänderung des löslichen Bors zum Einsatz kommt, und dies, um eine Möglichkeit zur schnellen Rückkehr der Reaktorleistung zu bewahren.

5. Verfahren zum Steuern eines Kernreaktors nach einem der Ansprüche 1, 2, 3 und 4, dadurch gekennzeichnet, daß mindestens ein Steuerstabbündel eine verminderte Reaktivitätsabsorption aufweist, wobei diese verminderte Reaktivitätsabsorption unter 700 pcm ($10^{-5}$) liegt.

6. Steuerverfahren nach Anspruch 5, dadurch gekennzeichnet, daß zwei Bündel mit verminderter Reaktivitätsabsorption oder graue Bündel und zwei Bündel mit starker Absorption oder schwarze Bündel zum Einsatz kommen.

**Claims**

1. Process for the control of a nuclear reactor by moving groups of control rods in the core of this reactor when a control parameter representing a deviation between the power demanded of the turbine and the real power of the core is outside a predetermined range, or dead band, bracketing the zero value, the speed and the direction of movement of the groups of rods being determined solely as a function of the value and the sign of the control parameter, characterised in that, when the control parameter is within its dead band, a regulation of the distribution of the power released by this core along the axial direction of the core is carried out by the movement of at least one group of rods, at a speed and in a direction of movement which are determined solely as a function of the value and the sign of the control parameter, when a parameter representing the axial distribution of power, called an axial deviation, is outside a predetermined range, or dead band, bracketing a reference value of the axial deviation, the group which is moved being determined as a function of the position of other groups in the reactor core, of the sign of the control parameter and of the deviation of the axial deviation relative to its dead band, and in that, when the control parameter is outside its dead band, the differences between the amplitudes of insertion of groups taking part in the control of the reactor are varied by stopping or starting selected groups as a function of the position of the groups in the reactor core and of the deviation of the axial deviation either relative to its dead band, if this axial deviation is outside this dead band, or relative to its reference value if the axial deviation is within its dead band.

2. Control process according to Claim 1, characterised in that a signal representing the control parameter of the reactor is produced, that this signal is compared to the terminal values of a range representing the dead band of the control parameter, that this signal is compared to the zero value to determine its sign, in that two different signals for insertion or withdrawal of control rods are then transmitted depending on the sign of the control parameter, if this parameter is outside its dead band, and a single signal for insertion or withdrawal of control rods depending on the sign of the control parameter, if this parameter is within its dead band, and in that these signals together with signals representing the axial deviation of the power and of the position of the groups of control rods are entered into a logical processing unit which determines the signals authorising or prohibiting movements of the various groups of control rods.

3. Control process according to either one of Claims 1 and 2, characterised in that, concurrently with the groups of control rods, use is made of a system for regulating the content of soluble boron in a cooling medium in contact with the fuel elements of the core of the nuclear reactor.

4. Process for the control of a reactor according to Claim 3, characterised in that, when the power of the reactor is less than its nominal power, the groups of control rods are maintained in a position of insertion which is substantially the same as that which would just be required to obtain a return to full power relying only on the control rods, by using the system for changing the content of soluble boron and this in order to retain a possibility of a rapid return to the reactor power.

5. Process for the control of a nuclear reactor according to any one of Claims 1, 2, 3 and 4, characterised in that at least one of the groups of control rods is lightened in respect of anti-reactivity, this antireactivity being less than 700 per hundred thousand.

6. Control process according to Claim 5, characterised in that use is made of two groups lightened in antireactivity, or grey groups, and two strongly absorbing groups, or black groups.

Fig1

0 051 542

11

# Fig 2

# Fig 5

# Fig 4

# Fig 3